# EUROPEAN PATENT APPLICATION

(11) **EP 1 868 072 A2**
(43) Date of publication of application: **19.12.2007**
(21) Application number: 07108873.6
(22) Date of filing: 24.05.2007
(51) Int. Cl.: G06F 3/048

(54) **System and method for opening applications quickly**

(30) Priority: 12.06.2006 CN 200610091733
(71) Applicant: Peng, Chien-Chiang, Taipei City (TW)
(72) Inventor: Peng, Chien-Chiang, Taipei City (TW)
(74) Representative: Viering, Jentschura & Partner

(57) **Abstract**

A system for opening an application quickly is suitable for an electronic device, and includes a receiving unit, a recognition unit, a menu screen interface, and a function-opening unit. The receiving unit is for receiving a first data, and the recognition unit searches to compare the first data with a database, and then, according to the compared result, outputs at least one second data. The menu screen interface produces a list of corresponding applications resulting from the second data. The function-opening unit loads the application-opening directive of one of the applications from the database while detecting this application has been triggered, and then opens the corresponding application. Hence, the system can list the related applications by distinguishing the first data, and achieves the goal of opening an application quickly.

## Description

### BACKGROUND OF THE INVENTION

### 1. Field of the invention

The present invention relates to a system and method for opening an application quickly in an electronic device and, more particularly, to a system and method that opens the application quickly by recognizing and distinguishing different input data.

### 2. Description of Related Art

With the vigorous development of the mobile communication and the consumer electronics industries, almost everyone these days has digital products in their possession at all times. Moreover, a variety of functions are usually integrated into a single product (e.g., mobile phone). These functions are displayed in the form of directories and subdirectories so that users can conveniently select the desired application or service through a menu screen.

Users have become accustomed to the above conventional selection method. However, when using this selection manner to open a certain application or service, it is necessary to first know which directory the desired item (application or service) has been classified and placed into. It is sometimes even necessary to search and determine whether this function exists or not. During the selection and search, a user has to press a variable number of keys. This is annoying for users who are using the product for the first time, are just getting used to a new device, or use their device infrequently.

Moreover, data cannot be effectively shared between various functions of an electronic device. Although there are products equipped with powerful processors, such as smartphones, which have copy and paste functions, difficulties still arise due to the inconvenience in opening applications. For instance, when a user views a text message on their mobile phone which includes a telephone number, if he or she wants to store the number into their list of contacts, he or she has to first write down the number, switch to the phone book function of their mobile phone and then add the number and name to their list of contacts. Even if the user utilizes a smartphone, he or she also has still to mark the information, copy it, open the phone book, and paste the information therein.

Therefore, in the prior art, when a user wants to use the functions of a product, he or she has to first select the desired application or service in the menu screen and then input the information. Therefore, both the convenience and practicality of the prior art have drawbacks that can be improved.

### SUMMARY OF THE INVENTION

An object of the present invention is to provide a system and method for opening an application quickly, in which, when a user inputs a piece of data or text, the system automatically lists all the corresponding applications which the user could wish to subsequently use. The user can then choose from the list an application to open. The system and method are both simple and convenient for users.

To achieve the above object, the present invention provides a system for opening an application quickly that is suitable for an electronic device. The system includes a receiving unit, a recognition unit, a menu screen interface, and a function-opening unit. The receiving unit receives a first data. The recognition unit further includes a database, and searches the database to compare the first data with the database, and then according to the result outputs at least one second data. The menu screen interface is used for producing the corresponding applications resulting from the second data. The function-opening unit loads the application-opening directive of an application from the database while detecting that an application has been triggered, and then opening the corresponding application.

To achieve the above object, the present invention also provides a method for opening an application quickly that is suitable for an electronic device. The method comprises the steps of: receiving a first data; analyzing the format of the first data and searching to compare the first data with a database; outputting at least one second data according to the compared result; providing a menu screen interface to list corresponding applications resulting from the second data; and providing a function-opening unit to load the application-opening directive of one of the applications from the database while detecting that the application has been triggered, and then opening a corresponding application in the electronic device.

### BRIEF DESCRIPTION OF THE DRAWINGS

The various objects and advantages of the present invention will be more readily understood from the following detailed description when read in conjunction with the appended drawing, in which:
Fig. 1 is an architecture block diagram of the system for opening an application quickly according to a preferred embodiment of the present invention;
Fig. 2 is a flowchart of the method for opening an application quickly according to a preferred embodiment of the present invention;
Fig. 3 is a flowchart of the method for performing an application-opening directive of the present invention;
Fig. 4 is an operational diagram according to a first application embodiment of the present invention;
Fig. 5 is an operational diagram according to a second application embodiment of the present invention;
Fig. 6 is an operational diagram according to a third application embodiment of the present invention; and
Fig. 7 is an operational diagram according to a fourth application embodiment of the present invention.

### DETAILED DESCRIPTION OF THE PREFERRED EMBODIMENTS

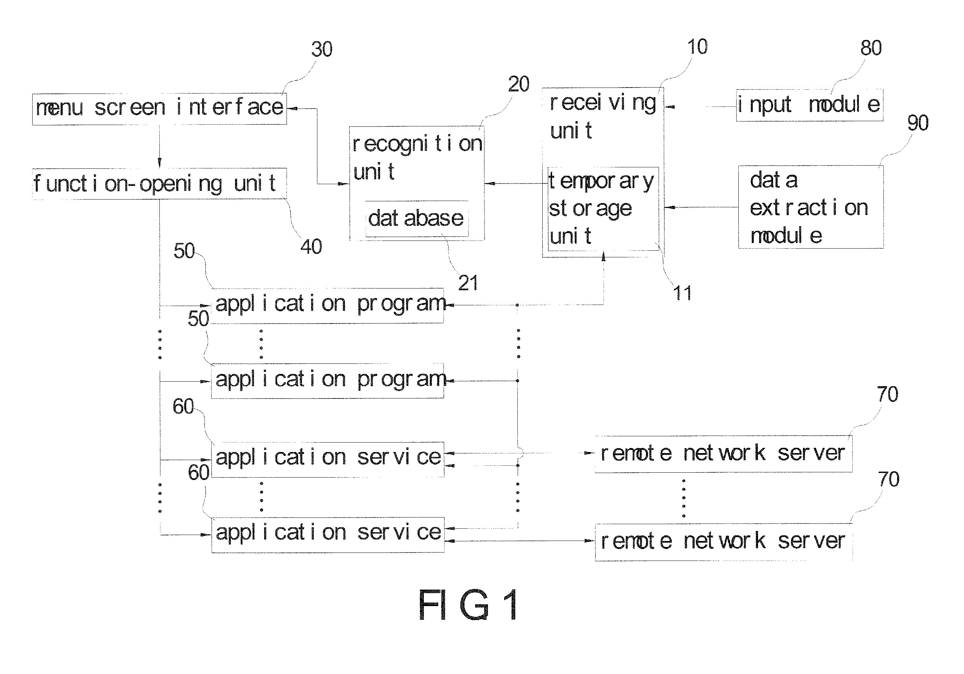

As shown in Fig. 1, the present invention provides a system for opening an application quickly that is suitable for an electronic device. The system includes a receiving unit 10, a recognition unit 20, a menu screen interface 30, and a function-opening unit 40. The electronic device can be a mobile communication device, a personal digital assistant (PDA), a computer, an industrial computer system, or an information appliance (IA) product. The present invention can support systems that can switch the input method on a screen.

The receiving unit 10 is used for receiving a first data, and further includes a temporary storage unit 11 for storing the first data. The first data can be a character data or a string data, and is generated by an input module 80 or a data extraction module 90. The input module 80 can be a key module, a handwriting input module, or a remote control that is used by the user for directly inputting data. The data extraction module 90 is used for analyzing an already existing document and extracting at least one character or string in the document to produce the first data. The recognition unit 20 further includes a database 21. The recognition unit 20 searches to compare the first data with the database to output at least one second data according to the compared result. The database 21 classifies search conditions by data, byte, and data content. The data can be phone number, a time, a date, a numeral or mathematical expression, an email address, an IP address, an address, or even a stock code or flight number. Moreover, the second data can be a name or a code.

The menu screen interface 30 is used for producing corresponding applications resulting from the second data. Each of these applications has fields for a code name, a text illustration, a symbol or an icon to facilitate clear understanding when a user selects the field. The function-opening unit 40 loads the application-opening directive of one of the applications from the database 21 while detecting an application has been triggered, and then opens the corresponding application in the electronic device. The application can be an application program 50 or an application service 60. The application program 50 is a standalone program in the electronic device. The application service 60 connects and communicates with a remote network server 70 by means of packet transfer. Moreover, the application program 50 and the application service 60 have different applications when matched with the different basic systems of an electronic device.

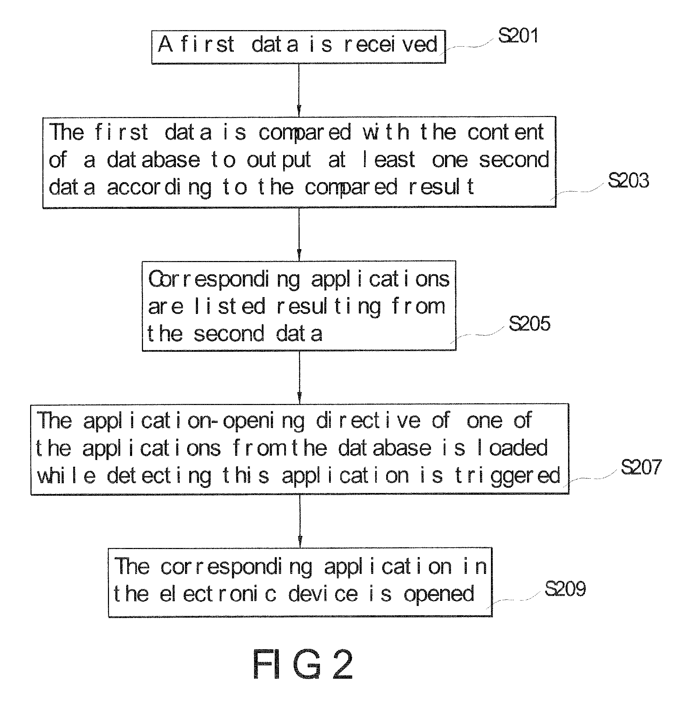

As shown in Fig. 2, the present invention provides a method for opening an application quickly that is suitable for an electronic device, such as a mobile phone, a PDA, a computer, an industrial computer system or an information appliance product. The method comprises the following steps: first, a first data is received (S201) and stored into a temporary storage unit 11. The first data is a character data or a string data, and is generated by an input module 80 or a data extraction module 90. The data extraction module 90 is used for analyzing an already existing document and extracting at least one character or string in the document to product the first data. Next, the format of the first data is analyzed to search and compare the first data with the content of a database 21 and output at least one second data according to the compared result (S203). The database 21 is searched and compared by using the data, the byte and the data content as the search conditions. The second data are the name or the code.

A menu screen interface 30 is then provided for listing corresponding applications resulting from the second data (S205) so that users can define and select an application. Subsequently, a function-opening unit 40 is provided for loading the application-opening directive of one of the applications from the database 21 when it has been detected that an application has been triggered (S207), then the corresponding application in the electronic device is opened (S209). The application can be an application program 50 or an application service 60. The application program 50 is a standalone program. The application service 60 is used to connect and communicate with a remote network server 70.

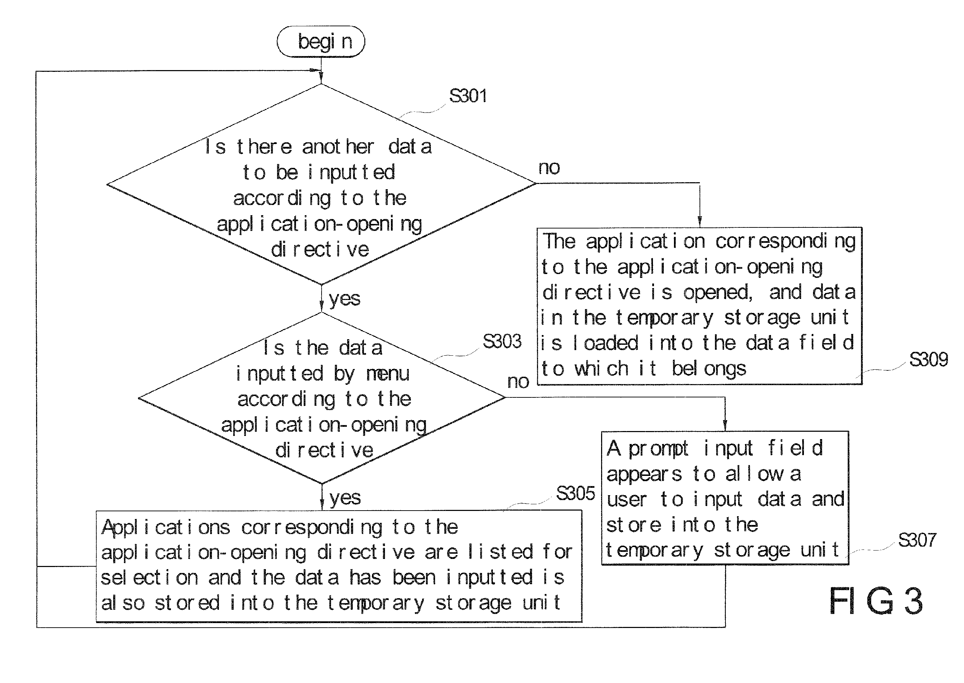

Fig. 3 is a flowchart of the method for performing an application-opening directive of the present invention to further illustrate the application-opening directive executed from S207 to S209 in Fig. 2. First, whether another data needs be inputted or not is determined according to the application-opening directive (S301). If the answer is yes, whether the data is been inputted via the menu is confirmed according to the application-opening directive (S303). If the answer is yes, applications corresponding to the application-opening directive are listed on the menu screen interface 30 for selection and the data has been inputted is also stored into the temporary storage unit 11 (S305). If the answer in S303 is no, a prompt input field appears to allow a user to input data and the data has been inputted store into the temporary storage unit 11 (S307). After S305 or S307, the system returns to S301 for continuing to determine whether another data needs to be inputted. Until the answer in S301 is no, the application corresponding to the application-opening directive is opened, and data in the temporary storage unit 11 is loaded into the data field to which it belongs in the application (S309).

The present invention will be exemplified using a mobile phone in the following embodiments. The applications of the application program 50 and the application service 60 differ based on different mobile phones. It should be noted that the present invention is not limited to these embodiments.

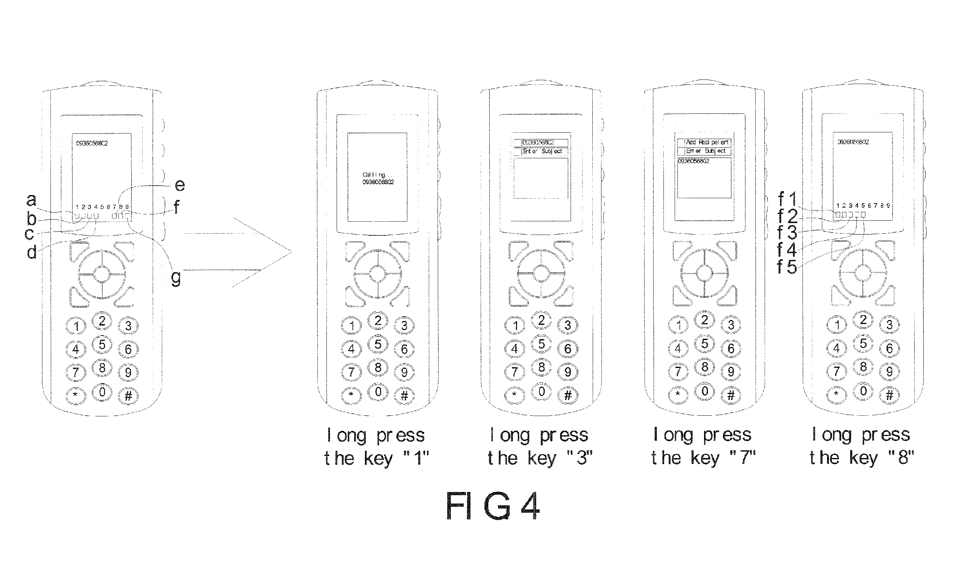

Fig. 4 is an operational diagram according to a first application embodiment of the present invention. First, digits are inputted in order into the mobile phone to form a complete phone number. After confirming that the data conforms to the specifications for a phone number of the database 21, applications related to the phone number and the byte will be listed for the user to select. As shown in Fig. 4, these applications include: (a) dial a voice phone, (b) dial a video phone, (c) send a text message to this phone number, (d) store the phone number of the contact person, (e) use the content of a text message to be sent, (f) store the content, and (g) use the search content. A user can operate the direction keys or long press the representative keys on the menu screen interface 30 to select one of the applications in order to open a corresponding application. For instance, a user can long press the key "1" to dial a voice phone, long press the key "3" to send a text message to this phone number, long press the key "7" to send a phone number as the content of a text message, or long press the key "8" to enter the next directory or subdirectory of the menu screen of (f): store the content. This next directory or subdirectory of the menu screen can further include the following items for selection: (f1) text message draft, (f2) edit the contact details for a contact, (f3) calendar, (f4) to do list, or (f5) notepad.

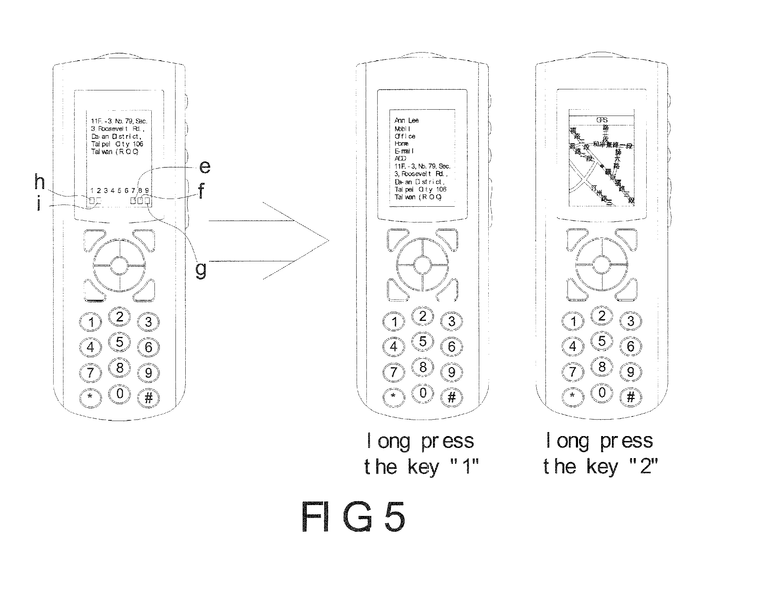

Fig. 5 is an operational diagram according to a second application embodiment of the present invention. First, address data is inputted into a mobile phone. After confirming that the data conforms to the specifications for an address in the database 21, applications shown in Fig. 5 can be listed. These applications include: (h) store the address of the contact person, (i) open the global positioning system (GPS), (e) forward a text message, (f) store the content, and (g) use the search content. The operational manner is illustrated in Fig. 4. A user can long press the key "1" to store the inputted address data as the address of the contact person, or long press the key "2" to open the GPS and pinpoint the exact position of the inputted address.

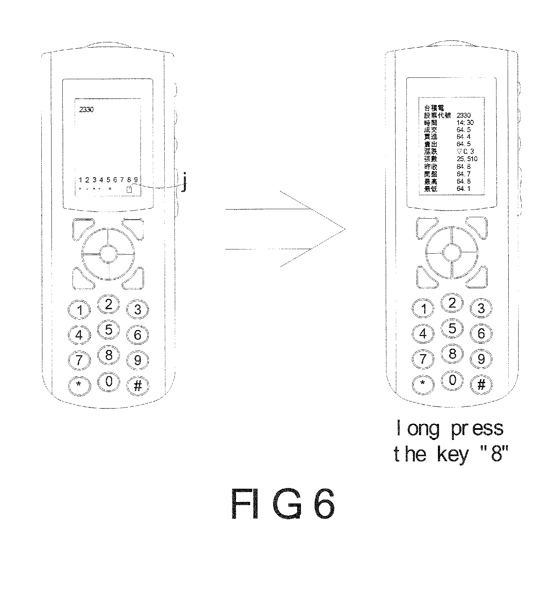

Fig. 6 is an operational diagram according to a third application embodiment of the present invention. As shown in Fig. 6, after a user inputs a four-digit number, in addition to listing the original operator applications for calculation, the application of "(j) : look up a stock" will appear because the four-digit number conforms to the stock code in the database 21. The application of "(j): look up a stock" belongs to the application service 60, which connects and communicates with the remote network server 70. Under the same operation, after a user long presses the key "8", a text message for looking up stock will be sent to the remote network server 70, and a returned text message of the stock information will later be received and displayed.

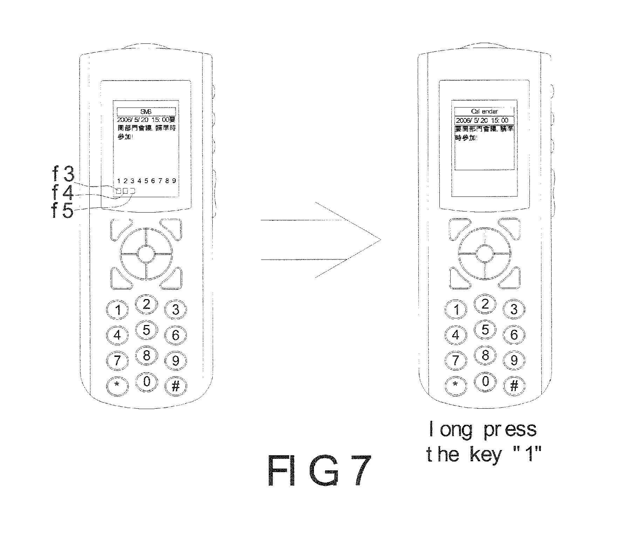

In the above embodiments, the first data is manually inputted by the user. In another embodiment, the data extraction module 90 is used to mark at least one character or a string of characters in a text message as the first data. After the first data is compared with the content in the database 21, related applications can be listed for selection and operation by the user when reading the text message. Fig. 7 is an operational diagram according to a fourth application embodiment of the present invention. As shown in Fig. 7, after receiving a text message, a date and a time in the text message are marked. After confirming that the data conforms to the specifications for a date and a time in the database 21, applications conforming to both types can be listed, e.g., (f3) calendar, (f4) to do list, and (f5) notepad. The operational manner is described above. A user can long press the key "1" to open the calendar program and load data into a data field to which it belongs in the calendar.

To sum up, the present invention can be applied to an electronic device. The present invention lists related applications for a user to select by determining the type of data that is inputted by a user. Not only is the goal of opening an application quickly achieved, the present invention has also the following advantages:
1. Convenient sharing of data: Data in a certain application in an electronic product can be extracted and selected from the content of a document and then compared with the content of a database 21 using specific search conditions in order to list applications conforming to the search conditions for selection, thereby making data sharing between various applications more convenient.
2. More humanized operation: From the standpoint of human nature, people first have a job to do and then think about which tool to use to do the job. The present invention makes use of this idea to design and improve the operation, and therefore changes the habit in the function-opening operation of most products. The content to be dealt with is first inputted, and the application to be used is selected. This changes the conventional habit of first selecting the application and then inputting the content, and achieves more humanized operation.

Although the present invention has been described with reference to the preferred embodiments thereof, it will be understood that the invention is not limited to the details thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A system for opening an application quickly that is suitable for an electronic device, the system comprising:
a receiving unit used for receiving a first data;
a recognition unit further comprising a database, the recognition unit searching to compare the first data with the database to output at least one
second data;
a menu screen interface for producing corresponding applications as a result
of the second data; and
a function-opening unit for loading the application-opening directive of one of the applications from the database while detecting the application has been triggered, and then opening the corresponding application.

2. The system for opening an application quickly as claimed in claim 1, wherein the first data is a character data or a string data.

3. The system for opening an application quickly as claimed in claim 1, wherein the first data is generated by an input module or a data extraction module.

4. The system for opening an application quickly as claimed in claim 3, wherein the data extraction module analyzes a document and extracts at least one data to generate the first data.

5. The system for opening an application quickly as claimed in claim 1, wherein the receiving unit further comprises a temporary storage unit for storing the first data.

6. The system for opening an application quickly as claimed in claim 1, wherein the database classifies search conditions by data, byte and data content.

7. The system for opening an application quickly as claimed in claim 1, wherein the second data is a name or a code.

8. The system for opening an application quickly as claimed in claim 1, wherein each of the applications has fields for a code name, a text illustration, a symbol or an icon.

9. The system for opening an application quickly as claimed in claim 1, wherein the application is an application program or an application service.

10. The system for opening an application quickly as claimed in claim 9, wherein the application service is for connecting to a remote network server.

11. The system for opening an application quickly as claimed in claim 1, wherein the electronic device is a mobile communication device, a PDA, a computer, an industrial computer system or an information appliance (IA) product.

12. A method for opening an application quickly that is suitable for an electronic device, the method comprising the steps of:
receiving a first data and storing the first data into a temporary storage unit;
analyzing the format of the first data and searching to compare the first data with a database;
outputting at least one second data according to the compared result;
providing a menu screen interface to list corresponding applications as a result of the second data; and
providing a function-opening unit to load the application-opening directive of one of the applications from the database while detecting the application has been triggered, and then opening a corresponding application.

13. The method for opening an application quickly as claimed in claim 12, wherein the first data is a character data or a string data.

14. The method for opening an application quickly as claimed in claim 12, wherein the first data is generated by an input module or a data extraction module.

15. The method for opening an application quickly as claimed in claim 14, wherein the data extraction module is for analyzing a document and extracting at least one data to generate the first data.

16. The method for opening an application quickly as claimed in claim 12, wherein the database classifies search conditions by data, byte and data content.

17. The method for opening an application quickly as claimed in claim 12, wherein the second data is a name or a code information.

18. The method for opening an application quickly as claimed in claim 12, wherein the application is an application program or an application service.

19. The method for opening an application quickly as claimed in claim 18, wherein the application service is for connecting to a remote network server.

20. The method for opening an application quickly as claimed in claim 12, wherein the electronic device is a mobile communication device, a PDA, a computer, an industrial computer system or an information appliance (IA) product.

21. The method for opening an application quickly as claimed in claim 12, wherein the method for opening the application in the electronic device further comprises the following steps:
(a) determining whether another data is to be inputted or not according to the application-opening directive;
(b) confirming whether the data is inputted via a menu or not according to the application-opening directive if the answer in the step (a) is yes;
(c) producing applications corresponding to the application-opening directive for selecting and storing to the temporary storage unit if the answer in the step (b) is yes;
(d) displaying for data input and storing into the temporary storage unit if the answer in the step (b) is no;
(e) determining whether there is another data to be inputted or not; and
(f) opening an application corresponding to the application-opening directive and loading data of the temporary storage unit into a data field in the application if the answer in the step (e) is no.

22. The method for opening an application quickly as claimed in claim 21, wherein the step (f) is directly jumped to for opening the corresponding application if the answer in the step (a) is no.

23. The method for opening an application quickly as claimed in claim 21, wherein the step (b) is jumped to for confirming whether the data is inputted via a menu or not if the answer in the step (e) is yes.
